# EUROPEAN PATENT SPECIFICATION

(11) **EP 3 102 037 B1**
(45) Date of publication and mention of the grant of the patent: **07.08.2019**
(21) Application number: 15708334.6
(22) Date of filing: 05.02.2015
(51) Int. Cl.: A21B 3/13

(54) **A COOKING MOULD FOR FOOD PRODUCTS AND PROCESS FOR REALISING THE SAME**
BACKFORM FÜR LEBENSMITTELPRODUKTE UND VERFAHREN ZUR HERSTELLUNG DAVON
MOULE DE CUISSON POUR PRODUITS ALIMENTAIRES ET SON PROCÉDÉ DE MISE EN OEUVRE

(30) Priority: 06.02.2014 IT MI20140172
(43) Date of publication of application: 14.12.2016
(73) Proprietor: Novacart S.P.A., 23846 Garbagnate Monastero (Lecco) (IT)
(72) Inventor: ANGHILERI, Gianmario, I-23864 Malgrate (Lecco) (IT)
(74) Representative: Ponzellini, Gianmarco
(86) International application number: PCT/IB2015/050881
(87) International publication number: WO 2015/118480

(56) References cited:
- US-A- 1 811 566
- US-A- 2 503 874

## Description

### FIELD OF THE INVENTION

The present invention relates to a cooking mould for food products, a process for realising the same and a use of the mould. For example, the present invention can be used in the confectionary sector for preparing sweet foods of medium-to-large size, such as panettone cakes, tarts or the like, in particular the mould can be used for cooking and subsequent packing of confectionary.

### FIELD OF THE INVENTION

As is known, in pastry products, such as panettone cakes or the like, it is usual to avail of a cooking mould made of a paper product able to receive the initial mixture and define a support and cooking mould for the food. These moulds are further able to define the confectionary (support, containment and presentation) of the product subsequently to the cooking thereof. In particular, moulds for cooking panettone cakes are known that comprise a base, usually circular in shape, and a lateral wall: the base and lateral wall are made separately and are subsequently assembled. The step of assembly of the base and the lateral wall has the aim of making one solid to the other so as to form a cavity able to house the mixture destined to be cooked. In greater detail, the assembly step between the lateral wall and the base includes gluing a lower folded portion of the lateral wall to a perimeter portion of the base.

Though the known moulds enable support and cooking of the food product, these moulds are not free of limitations and drawbacks. For example, a first limitation relates to the number and type of working necessary for predisposing the structure of the moulds, which considerably complicates the step of formation and assembly of the mould during which at least the lateral wall is manipulated so as to be engaged to the base and positioned so as to define the package. The machines predisposed for industrial manufacturing of this type of mould are rather complex.

Some drawbacks are also connected to the step of assembly (gluing) of the lateral wall to the base. For example, problems can arise when the glue is not correctly distributed on the surfaces of the mould to be glued, which, being arranged at the lower perimeter portion of the base of the mould, are surfaces the suitable fixing whereof is fundamental to guaranteeing the correct functioning of the cooking mould. Should the gluing between the base and the lateral wall not be done correctly, the mixture, which is in the moment of placing internally of the mould usually in the liquid state, might actually exit from the mould itself. A non-optimal gluing of the surfaces of the mould at the lower portion of the base might further create problems in the manipulation and/or movement of the food product following cooking thereof. Further problems might emerge should the glue not be distributed homogeneously at the surfaces of the mould. For example, a heterogeneous distribution of the glue might negatively influence the transmission of heat to the lower perimeter portion of the base of the mould, which might create problems related to a non-homogeneous cooking of the food product internally of the mould. Further, it is necessary to separately predispose the base and the lateral wall; thereafter it is necessary to use the glue to fix the various components and wait for them to be fixed. The fact of having to provide two different components requires the use of two different punches and synchronization of the process; this is not only expensive, but the process of this type can significantly increase production wastes due to the cutting of the cardboard for defining the blanks that will make up the base and the lateral wall. Further, the introduction of the glue increases the costs of the raw materials as well as further complicating the process due to the fact of having to introduce steps of application and drying of the glue.

The use of an undulating paper typical of these applications makes many deep-drawing or folding operations difficult, as the undulations define stiffeners which oppose the deforming operations of the paper and which, further, generate undesired behaviours during the folding (for example the folds tend to follow the ribs). This last type of container is for example described in document US 1811566 A; in the cited United States application a container is disclosed, made of paper material for cooking in an oven. The container comprises a base and a lateral wall, both constituted by a first completely smooth paper layer and a second undulated paper layer: the smooth layer is generally used to define the internal surface of the container while the undulated layer defines the external surface thereof. The undulated layer is defined by a plurality of undulations, each of which exhibits an identical/constant section along a whole longitudinal development thereof. As described above, the use of known undulated papers makes the steps of deep-drawing and folding of the whole paper layer complex: the folding step is very delicate. The folding process is to be done slowly and with specific tools for the moulds which have to seek to manage the tendency of the folded layers to follow the ribs. Further, the long process times caused by the delicate folding step of the paper layers and the need to introduce special tools has a negative effect on the costs of the final product.

Also known in the paper processing industry - see for example United States patent application no. US 2503874 A - are undulated sheets made of a paper material constituted by a substantially smooth reinforcing layer engaged to an undulated layer; the undulated layer comprises a series of longitudinal undulations parallel to one another and extending along a whole longitudinal extension of the sheet of paper material. Each undulation also exhibits, along a longitudinal extension thereof, a series of transversal cuts carried out at a predetermined distance from one another so as to define, for each undulation, a series of crests alternated by a series of spaces. In fact, the undulated layer exhibits a plurality of incisions defining a series of through-openings on the layer, and in particular on each undulation. The through-openings define zones of the undulated layer that are much-weakened and facilitate the folding of the sheet. Though the sheet is flexible, the plurality of incisions (through-openings) generates the forced folding zones which in any case make the manipulation of the sheet difficult. Further, the definition of through-openings on the undulated layer makes the sheet unsuitable for some uses such as for example the creation of cooking moulds: the mould must in fact guarantee a certain uniformity of cooking and the correct spreading of the heat, for example between the smooth sheet and the undulated sheet. The presence of the openings does not in any way enable correct spreading of the heat (the heat exits from the openings) and therefore prevents uniform heating of the cooking mould.

### AIM OF THE INVENTION

An aim of the present invention is therefore substantially to obviate at least one of the drawbacks and/or limitations of the preceding solutions.

A first aim of the invention is to make available a cooking mould that is particularly flexible and easy to manipulate. This condition not only enables deformation of the material so as to easily define different and complicated forms of the mould, but also prevents, during manipulation, the material of the mould from being subject to stresses and subsequently breaking. It is therefore a main aim of the invention to disclose a mould made of an undulated paper material which is best suited to folding or deep-drawing operations, enabling obtaining products having an excellent aesthetic and functional finish.

A further aim of the invention is to disclose a cooking mould which enables correct support and containment of the product during the step of placing the product internally of the mould, during the step of cooking and packaging of the product. A further aim of the invention is to disclose a cooking mould which enables a correct and homogeneous cooking of the food product. A further aim of the invention is to disclose a cooking mould configured such as to provide a simple and rapid process for realising the same so that the process, and therefore the product, is economical. A further aim of the invention is to disclose a process for realising a cooking mould that is simple and rapid and which enables reducing production costs to a minimum.

One or more of the above-described aims, which will more fully emerge during the course of the following description, are substantially attained by a cooking mould for food products, a process for realising the mould and a use of the mould according to one or more of the appended claims.

### SUMMARY

The invention is defined by independent claims 1 and 8.

### BRIEF DESCRIPTION OF THE DRAWINGS

Some embodiments and some aspects of the invention will be described in the following with reference to the accompanying figures of the drawings, provided by way of non-limiting example, in which:
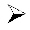 figure 1 is a perspective view of a cooking mould according to the present invention;
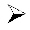 figure 1A is detailed view of a wall of the mould;
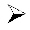 figure 2 is a lateral view of the cooking mould of figure 1;
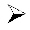 figures 3 and 4 are detailed views of a cooking mould according to the present invention;
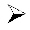 figure 5 is a perspective view of a cooking mould according to the present invention;
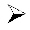 figures from 6 to 8 are respective section views of the cooking mould of figure 5 according to the present invention;
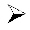 figure 9 is a further section view of a variant of the cooking mould according to the present invention;
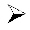 figure 10 is a section view from above of a cooking mould according to the present invention;
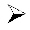 figures 11 and 12 are detailed views of a lateral wall of the cooking mould according to the present invention;
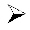 figure 13 is a view from above of a blank configured for realising a cooking mould according to the present invention;
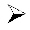 figures from 14 to 21 are respective views of variants for realising a cooking mould according to the present invention.
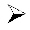 figures from 22 to 25 are schematic views of a process for realising a cooking mould according to the present invention.

### DETAILED DESCRIPTION

With reference to the accompanying figures of the drawings, reference numeral 1 denotes in its entirety a cooking mould made of a paper material for food products to be cooked in an oven, for support and packaging of sweet foods, for example panettone cake and/or tarts. In fact, the mould 1 of the present invention is suitable for essentially defining a container for support and oven-cooking of food products (especially confectionary) of medium-to-large dimensions.

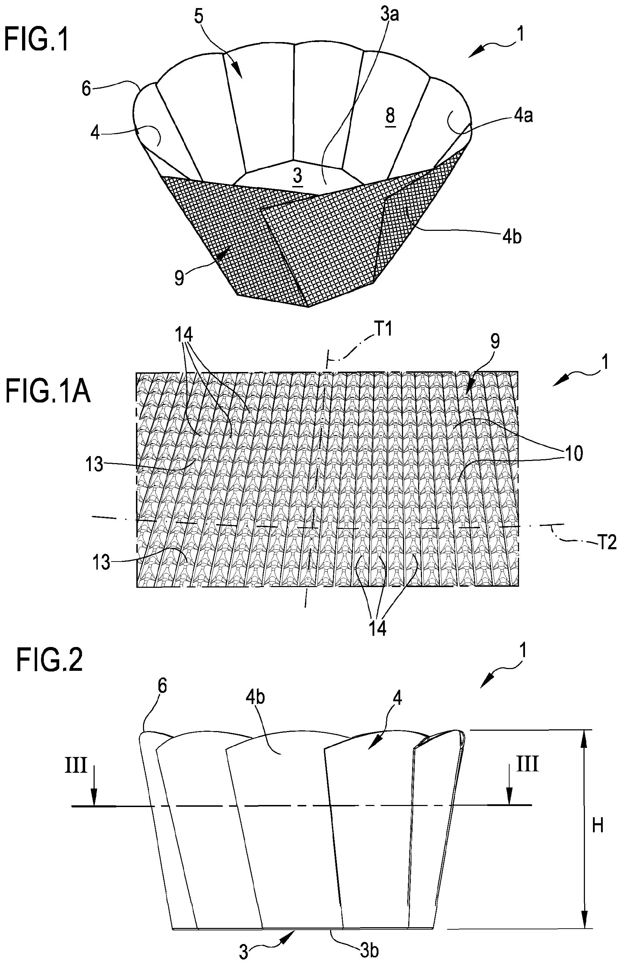

As can be seen in figure 2, the mould 1 comprises a base 3, substantially defining the lower part, or rest part, of the mould 1, and a lateral wall 4 which together define a housing compartment 5 (convex), configured such as to contain one or more food products, for example a mixture to be cooked: the lateral wall 4, on the opposite side with respect to the base 3, defines a free edge 6 delimiting the housing compartment 5 and and also defines an opening 7 located - in a use condition of the mould 1 able to sustain/support the product/the food - in an upper part of the mould 1.

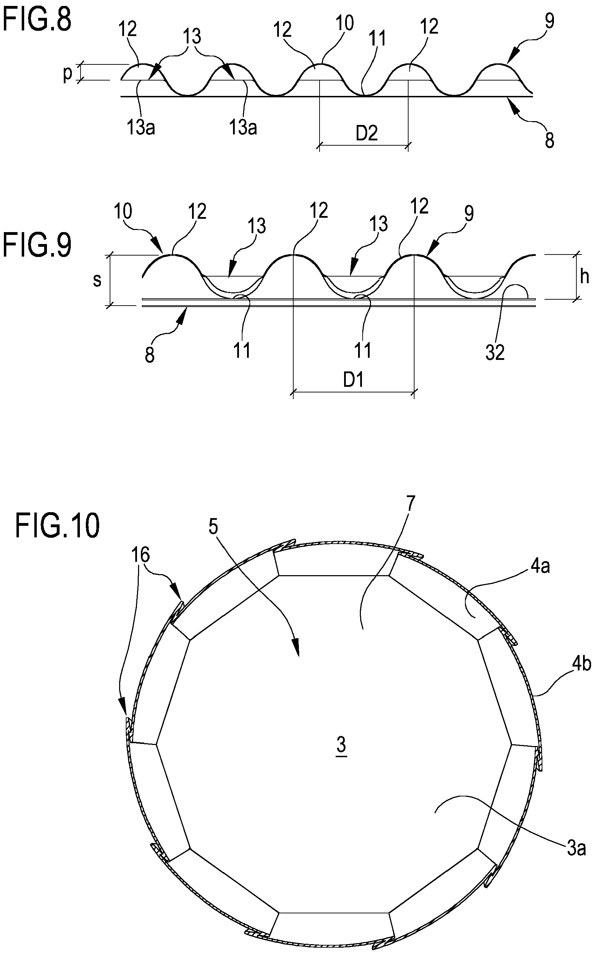

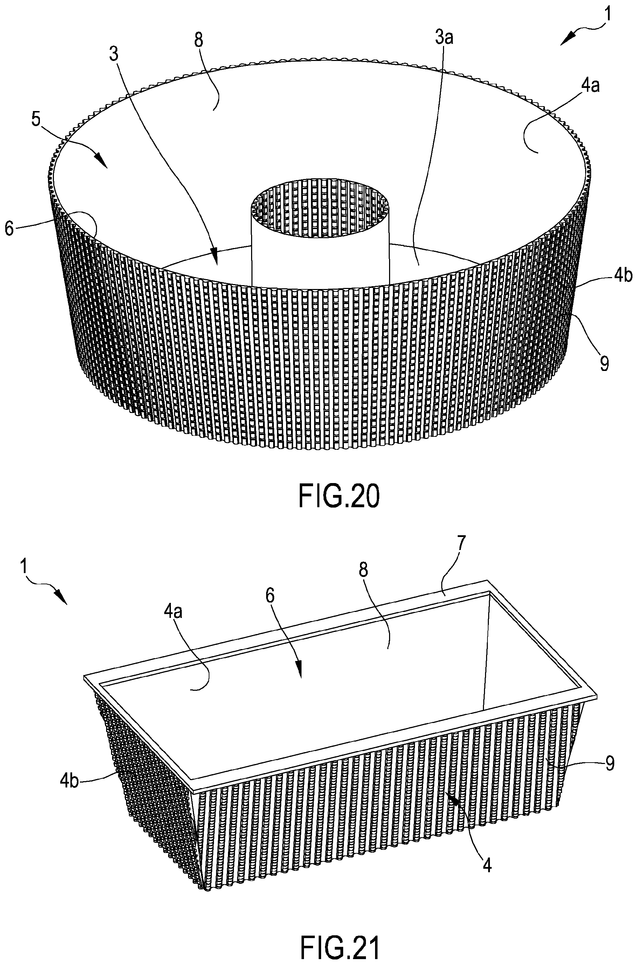

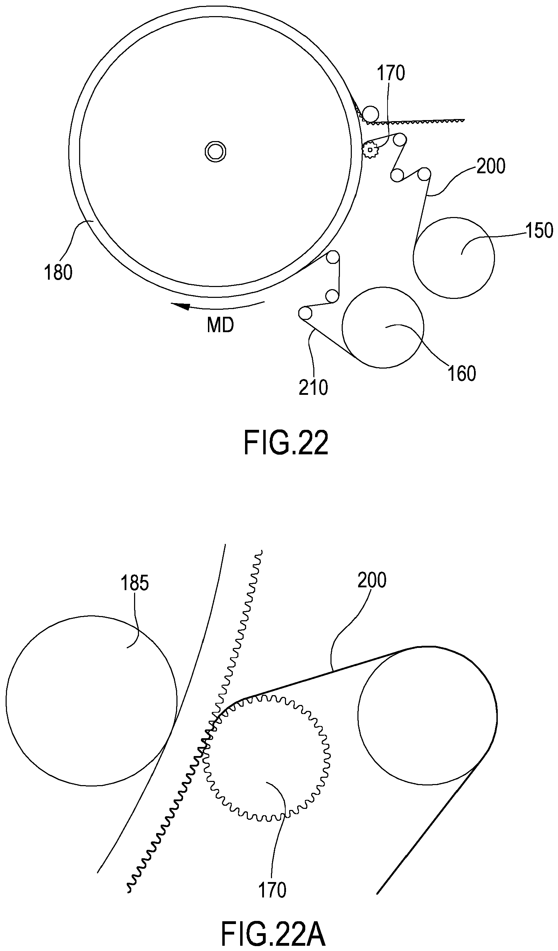

In detail, the base 3 extends substantially along a prevalent development plane so as to define a flat base. As can be seen, for example in figure 10, the base 3 can define a closed surface, integral (i.e. without through-openings passing internally of the closed surface), defining for example a circular profile. Further embodiments of the base 3 might exhibit a profile, non-limitingly, that is rectangular or more generally polygonal. However, the base 3 could also exhibit one or more openings; in an embodiment of the mould 1, illustrated in figure 20, the base 3 substantially defines a flat circular crown.

As concerns the dimension, though any dimension could be considered covered by the idea underpinning the present description, the base 3 exhibits an extended surface which has an area comprised between 25 and 3,000 cm², still more precisely comprised between 50 and 2,800 cm². The base 3 further exhibits a minimum dimension in plan view comprised between 50 and 300 mm, still more precisely comprised between 70 and 260 mm. The minimum dimension in plan view is for example defined, in a case in which the base 3 has a polygonal profile, by the minimum distance between two opposite sides of the base 3; specifically, in a case in which the base 3 exhibits a rectangular section, the minimum dimension in plan view is defined by the minimum width and/or length of the base 3. In a case in which the base 3 exhibits a circular profile, the minimum dimension in plan view is substantially given by the diameter of the base: in a case in which the base 3 is circular, the minimum dimension is substantially identical for the whole base 3 and therefore definable essentially as the overall dimension.

In still greater detail, the base 3 develops between a first and a second prevalent development surface 3a, 3b opposite one another; the maximum distance between the first and the second prevalent development surface 3a, 3b defines the thickness s of the base 3, which is comprised between 0.5 and 2 mm, in particular between 0.5 and 1.5 mm (note that this distance is measured taking account of the maximum thickness in the presence of undulated paper with unfaced undulated paper). According to the invention, the base 3 is made of a paper sheet material having, as previously described, a first and a second prevalent development surface 3a, 3b opposite one another; the base 3 is advantageously made with a multi-series single paper sheet (base in a single piece). The sheet material constituting the base 3 made of paper or cardboard and exhibits, for example, a grammage comprised between 80 g/m² and 200 g/m², in particular a grammage comprised between 100 g/m² and 150 g/m², still more in particular a grammage comprised between 120 g/m² and 150 g/m².

Non-limitingly, the first surface 3a represents the internal surface of the mould 1 (internal surface of the housing compartment 5) able to contact the food products. The first internal surface 3a advantageously exhibits a completely smooth surface.

In an embodiment that is not illustrated in the accompanying figures, the base 3 can be constituted by a single monolayer sheet: in this condition, the first and the second prevalent development surface 3a, 3b are defined by opposite faces of the single layer.

According to the invention, the base 3 comprises at least a first layer 8 made of a substantially smooth paper advantageously defining the first prevalent development surface 3a and at least a second layer 9 made of paper material, opposite the first layer 8, defining of the second prevalent development surface 3b. In fact, the first layer 8 defines a part of the internal surface of the housing compartment 5 able to contact the food products internally of the mould 1 while the second layer 9 defines at least a part of the external surface of the housing compartment 5 (exposed surface, not in contact with the food products). The first layer 8 is thus constituted by a sheet paper material having a smooth surface able to contact the food products (surface 3a).

The first layer 8 defining the internal surface 3a of the housing compartment 5 advantageously comprises at least a slim coating layer 15 made of a plastic material configured so as to cover the surface 3a. In greater detail, the coating layer 15 comprises at least a film of greaseproof and/or waterproof material, for example polyethylene base, configured so as to contact the food product to be arranged in the mould 1; the plastic material of the coating layer 15 comprises at least materials chosen from the following group: LDPE, HDPE, PP, PE.

As previously mentioned, the second layer 9 comprises at least a sheet made of a paper material defining at least a part of the second surface 3b of the base 3. In greater detail, the second layer 9 is an undulated layer exhibiting a plurality of undulations 10, each of which extends along a first trajectory T1 of prevalent development; as can be seen from the figures, the second layer 9, in a transversal section to the first trajectory T1 of the undulations 10, exhibits a substantially sinusoidal profile.

Each undulation 10 exhibits a predetermined height h defined by a maximum distance between a base portion 11 and a crest 12 of each undulation 10. As can be seen from the figures of the drawings, the undulated layer (second layer 9) further comprises a plurality of troughs 13 aligned along the first prevalent development trajectory T1 of the undulations 10 so as to define thereon a reduction in terms of height.

In a representation of the second layer 9, visible in figure 1A, the plurality of troughs 13 comprises a predetermined number of series of troughs 13, each series of troughs 13 being aligned along a second development trajectory T2 that is transversal, in particular perpendicular, to the first prevalent development trajectory T1 of the undulations 10. Each trough 13 exhibits, according to a transversal direction defined along the first prevalent development trajectory T1 of the respective undulation 10, a U-shape or a V-shape, a concavity of which is facing opposite with respect to the first layer 8.

In the preferred embodiment of the invention, at least the second layer (9) extends over all the extension of the base 3; it is also possible for at least the second layer 9 to extend at least to the external perimeter of the base 3, i.e. to the zone where the base 3 is engaged to the lateral wall 4. In greater detail, it can be seen that the plurality of undulations 10 and respective troughs 13 define on the second layer 9 a series of projections 14 each of which exhibits, in a view from above perpendicular to the projections 14, a profile having a substantially rectangular extension (figure 1A).

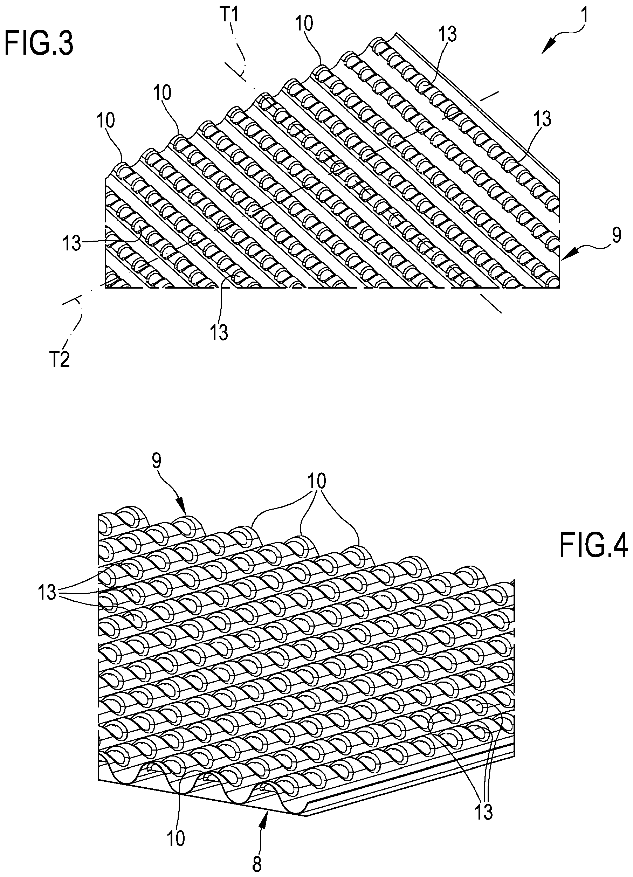

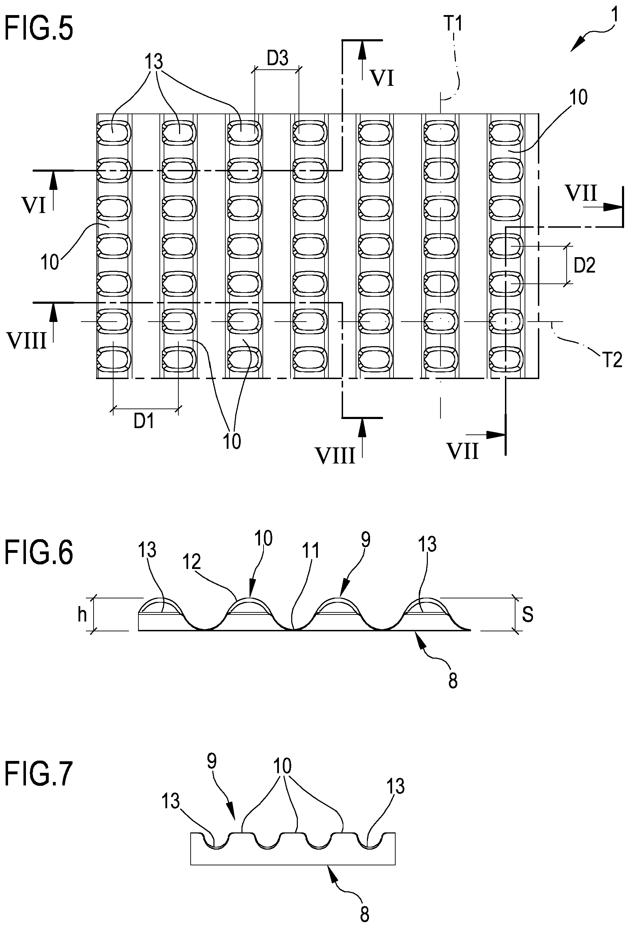

In a preferred embodiment of the invention, the first trajectory T1, along which each undulation 10 develops, is, non-limitingly, straight (see for example figures 3 and 5). Further, in the preferred embodiment of the invention, the undulations 10 are substantially parallel to one another. As is visible for example in figures from 3 to 5, the undulations 10 are, non-limitingly, equi-spaced to one another so as to define a plurality of undulations 10 homogeneously distributed on the base 3 or on a portion of the base 3.

As concerns the dimensional aspect, two immediately-consecutive undulations (10), transversally of the first development trajectory (T1) of the undulations (10), are arranged at a minimum distance (D1) from one another that is greater than or equal to 0.5mm, in particular comprised between 0.5 and 5 mm; the minimum distance (D1) being defined by a minimum distance between two crests (12) of two immediately-consecutive undulations (10) (figure 5).

As concerns the height h of each undulation 10, however, defined by a maximum distance between the base portion 11 and the crest 12 of a same undulation 10, is comprised between 0.3 and 2.5 mm, in particular comprised between 0.5 and 2 mm. The height of each undulation 10 is schematically represented in figures 6 and 9.

In a more detailed analysis of the troughs 13, it can be noted than the second prevalent development trajectory T2 of each series of troughs 13 is, non-limitingly, straight (see for example figures 3 and 5), in particular perpendicular, to the first prevalent development trajectory T1 of the undulations 10. As with the first trajectory T1, the second prevalent development trajectories T2 of the series of troughs 13 are also parallel to one another (series of parallel troughs). Further, the undulations 13 are also equi-spaced to one another so as to define a plurality of troughs 13 homogeneously distributed on the base 3 or on a portion of the base 3. Further, it is possible to define the minimum distance D2 between two series of troughs 13 immediately consecutive of one another, along the first development trajectory T1 of an undulation 10, which is identical to or greater than 0.5 mm, in particular comprised between 1 and 5 mm, still more in particular between 2.5 and 4.5 mm. The minimum distance D2 is defined by the minimum distance between two portions of bottom 13a of two immediately-consecutive series of troughs 13 along the first development trajectory T1 of an undulation 10. It is further possible to define a minimum distance D3 between two immediately consecutive troughs 13 along a same second prevalent development trajectory T2 (figure 5); in particular, the distance D3 is defined by a minimum distance between two portions of bottom 13a of two immediately-consecutive troughs 13 along the second prevalent development trajectory T2. The minimum distance D3 is identical to or greater than 0.3 mm, in particular comprised between 0.3 and 5 mm, still more in particular comprised between 0.5 and 3. The ratio between the minimum distance D1 between two undulations 10 and the minimum distance D2 between two troughs 13 along the same first development trajectory T1 of an undulation 10 is comprised between 0.3 and 4, in particular comprised between 0.6 and 1.2. Further, the ratio between the minimum distance D1 between two undulations 10 and the minimum distance D3 between two immediately-consecutive series of troughs 13 along the same second development trajectory T2 is comprised between 0.3 and 5, in particular comprised between 0.7 and 1.2. As concerns the ratio between the distances D3 and D2, as defined above, it is comprised between 0.3 and 4, in particular comprised between 0.6 and 1.2 As can be seen from figure 5, the minimum distance D3 between two immediately-consecutive troughs 13 along the second trajectory T2 depends on the distances D1 of two immediately-consecutive undulations 10. In fact, the distance D1 and D3 are substantially identical, at least in a case in which the trajectories T1 and T2 are substantially straight and perpendicular to one another. Still in an analysis of the troughs 13 in terms of dimensions, it can be observed that each of the troughs 13 exhibits a predetermined depth p defined by a maximum distance between the crest 12 of an undulation 10 and a bottom portion 13a of a trough 13 crossing the undulation 10. The depth p is schematically illustrated in section in figure 8. This depth p of the trough 13 is comprised between 0.3 and 2 mm, in particular is comprised between 0.3 and 1.6 mm. It is also possible to dimensionally define the height h of the undulations 10 and the depth p of the troughs 13 using the ratio of these dimensions; in fact, the ratio between the height h of the undulations 10 and the depth p of the troughs 13 is greater than 1.1, in particular is comprised between 1.2 and 3.

It is further useful to note that the base 3 can non-limitingly be constituted essentially by the first and second layer 8, 9 (this configuration is illustrated in figure 8); in this condition the second layer 9 is directly engaged to the first layer 8 by the portions of bottom 11 (first and second surface 3a, 3b directly engaged to one another): the overall thickness s of the base 3 substantially coincides with the height h of the undulations 10 (configuration illustrated in figure 6). However, it is also possible for the base 3 to comprise, between the first and the second layer 8, 9, at least an intermediate layer 32 (figure 9) engaged by a side to the first layer 8 and by the other side to the second layer 9; in this condition the first and second layer 8, 9 - respectively defining the first and second surface 3a, 3b - are indirectly engaged to one another by the intermediate layer 32. In the configuration in which the base 3 comprises the first layer 8, the intermediate layer 32 and the second layer 9, the thickness s of the base 3 will certainly be greater than the height h of the undulations 10.

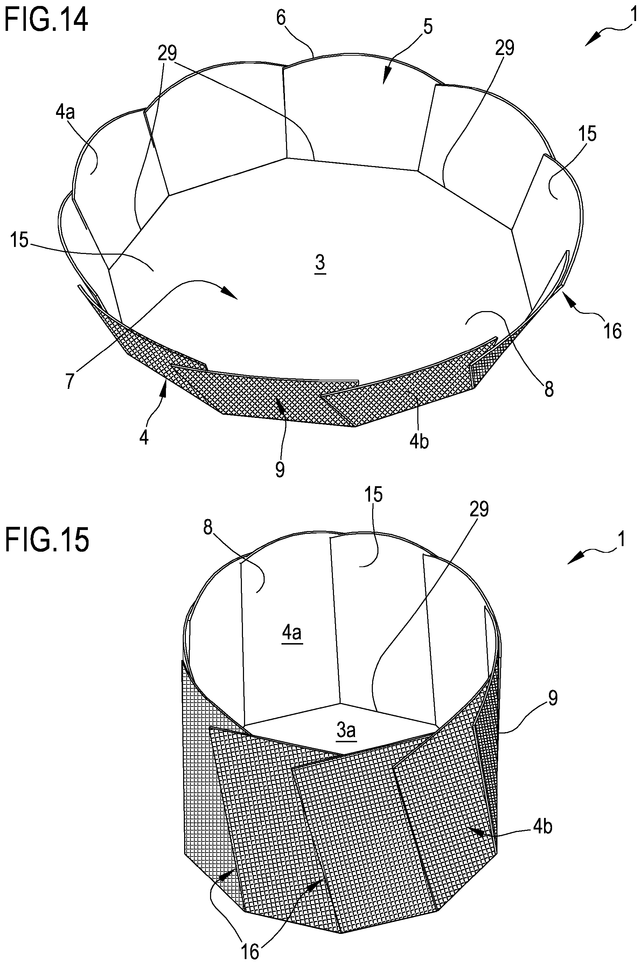

As described above, the mould 1 comprises at least a lateral wall 4 engaged to the base 3, and emerging transversally with respect thereto; in greater detail, the lateral wall 4 is engaged to the external perimeter of the base 3 (figures 2 and 10) and extends distancingly therefrom so as to define the housing compartment 5. In still greater detail, the lateral wall 4 comprises a closed surface extending from a first to a second longitudinal edge: the first edge is engaged and substantially coincides with the external perimeter of the base 3 while the second edge essentially coincides with the free edge 6. It is useful to specify that the mould 1, in the condition in which the lateral wall 4 defines the housing compartment 5, assumes an operating condition in which it can house a mixture for the purpose of cooking thereof and/or a finished food product; a mould 1 in operating conditions is for example illustrated in figure 1. In other terms, the operating conditions of a mould 1 correspond to the normal functioning conditions of a mould 1 for cooking food products. Analysing in greater detail the structure of the lateral wall 4, it can be seen that the lateral wall 4 defines an integral and continuous surface i.e. without through-openings which might cause exit of the food product for example during the step of filling the mould and/or during the cooking step of the food product. The lateral wall 4 can exhibit various forms, for example it can define a cylindrical or truncoconical element (figures 1, 14-19) and/or a parallelepiped element (figure 21). The lateral wall 4 advantageously follows the shape and emerges from the base 3; for example, in a case where the base 3 exhibits a circular profile, the lateral wall 4 defines, non-limitingly, a cylindrical or truncoconical shape. Vice versa, in a case where the base 3 exhibits a rectangular section, the lateral wall 4 exhibits, non-limitingly, a parallelepiped rectangular shape. Obviously it is possible for the configurations of the mould 1 to have a base 3 and lateral wall 4 having different extensions: in this condition the external perimeter of the base can define a different shape from the shape of the free end of the lateral wall 4. Independently of the shape of the base 3 and the lateral wall 4, the lateral wall 4 can emerge perpendicularly of the base 3 or can define a certain obtuse angle. The lateral wall 4 preferably defines, with the base 3, an internal angle to the housing compartment 5 that is obtuse, in particular comprised between 90° and 100°, still more in particular comprised between 90° and 95° (this configuration is illustrated for example in figures 1 and 14). The angulation of the lateral wall 4 is able to facilitate a stacking of the moulds 1. It is however possible to realise a mould 1 having the lateral wall 4 perpendicular (this configuration is illustrated in figure 15) to the base 3. The lateral wall 4 exhibits a predetermined longitudinal extension defined between the minimum distance between the edge and the second longitudinal edge (the latter also being the free edge 6); this extension is comprised between 30 and 200 mm, still more in particular is comprised between 50 and 150 mm. The maximum distance between the free edge 6 of the lateral wall 4 and the base 3 corresponds essentially to the overall height H of the mould 1, which is greater than 30 mm, in particular comprised between 30 and 200 mm, still more in particular comprised between 50 and 120 mm (figure 2). Obviously, the greater the inclination of the lateral wall 4 with respect to the base 3, the smaller will be the height of the mould 1 given a same longitudinal extension of the lateral wall 4. In a case in which the lateral wall 4 is perpendicular to the base 3, the longitudinal extension of the lateral wall 4 substantially coincides with the height H of the mould 1. In greater detail, the lateral wall 4 develops between a first and a second prevalent development surface 4a, 4b, opposite one another; the maximum distance between the first and the second prevalent development surface 4a, 4b defines the thickness s of the lateral wall 4 which is comprised between 0.3 and 2 mm, in particular between 0.5 and 1.5 mm. In fact, the thickness of the lateral wall 4 and the base 3 are advantageously, though not limitingly, identical. It is however possible to realise a base3 having a thickness s different to the thickness of the lateral wall 4.

The lateral wall 4 is made of a paper sheet material having, as described herein above, a first and a second prevalent development surface 4a, 4b opposite one another. Non-limitingly, the first surface 4a represents the internal surface of the mould 1 (internal surface of the housing compartment 5) able to contact the food products. The first internal surface 4a advantageously exhibits a completely smooth surface.

In an embodiment that is not illustrated in the accompanying figures, the lateral wall 4 can be constituted by a single monolayer sheet: in this condition, the first and the second prevalent development surface 4a, 4b are defined by opposite faces of the single layer.

According to the invention, the lateral wall 4 comprises at least the first layer 8 made of a substantially smooth paper advantageously defining the first prevalent development surface 4a and at least the second layer 9 made of paper material, opposite the first layer 8, defining the second prevalent development surface 4b. In fact, the first layer 8 defines a part of the internal surface of the housing compartment 5 able to contact the food products internally of the mould 1 while the second layer 9 defines at least a part of the external surface of the housing compartment 5 (exposed surface, not in contact with the food products). The first and the second layer 8, 9 of the lateral wall 4 are substantially the same as those described for the base 3: the structure and dimensions of the layers 8, 9 are the same also for the lateral wall 4.

As described above for the base 3, the first layer 8 of the base 3 and the lateral wall 4 (the first layer 4 internal of the housing compartment 5) can comprise at least a slim coating layer 15 made of a plastic material configured so as to cover the surface 4a. In greater detail, the coating layer 15 comprises at least a film of greaseproof and/or waterproof material, for example polyethylene base, configured so as to contact the food product to be arranged in the mould 1; the plastic material of the coating layer 15 comprises at least materials chosen from the following group: LDPE, HDPE, PP, PE. In greater detail, the first and the second layer 8, 9 can advantageously constitute all the lateral wall 4 (preferred configuration of the invention) or define only portions of the wall 4. In particular, the undulations 10 and the respective troughs 13 of the second layer 9 are present on the lateral wall 4 at least at the free edge 6 of the lateral wall 4. The plurality of undulations 10 and troughs 13 are preferably present on all the lateral wall 4 (they define all the external lateral surface of the mould 1).

It is useful to specify that the lateral wall 4 can advantageously be constituted by a single piece (single multilayer sheet) made of a paper material which is joined to the base 3, which base 3 is also advantageously realisable with a different single piece (sheet) made of a paper material. In this case, the base 3 and the lateral wall 4 are engaged to one another, for example by glue and/or adhesive elements: these elements are configured such as to engage the bodies stably and guarantee coupling even during the cooking and packaging step of the food product.

A second configuration of the mould 1 might include realising the base 3 and the wall 4 using a single multilayer sheet made of a paper material (mould 1 in a single piece). In the configuration described above, the mould 1 is obtained by deformation, for example by deep-drawing of a single flat sheet made of a paper material: the sheet, prior to the deformation step, lies in a prevalent development plane while, following the deformation step, is in an operating condition as described above (the mould 1 exhibiting housing compartment 5, an internal surface of which housing compartment 5 is defined by the first prevalent development surfaces 3a, 4a respectively of the base 3 and the lateral wall 4). The process used for obtaining the mould will be more fully described in the following.

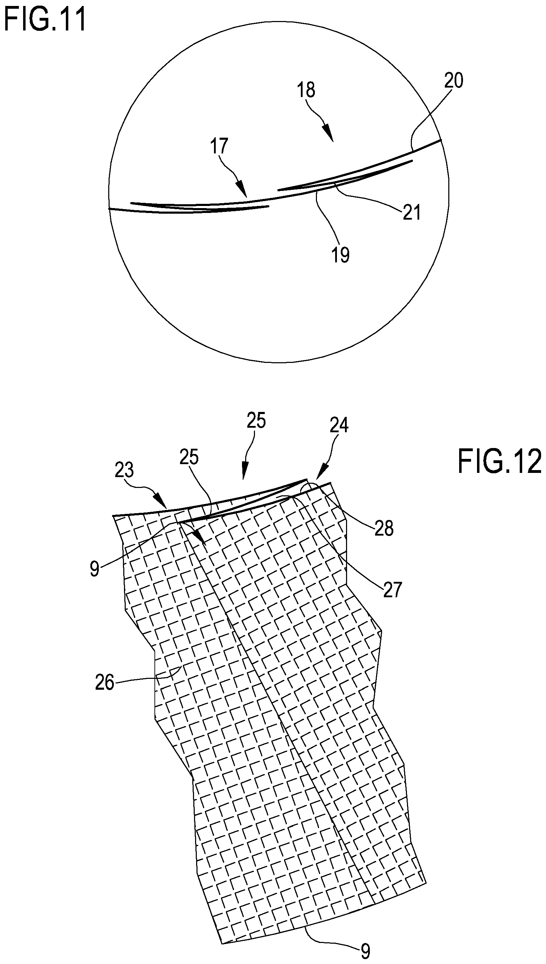

In a case where the mould 1 is obtained by deformation of a single sheet made of a paper material, at least the lateral wall 4 comprises a plurality of pleats 16. The pleats 16 are configured to enable, during the deformation step, displacing of the mould 1 from a flat sheet configuration, in which it lies on a prevalent development plane, to a three-dimensional configuration in which it can be a container. The pleats 16 comprise a plurality of first sectors 17, extending along the perimeter development of the lateral wall 4 (see also figure 11). The first sectors 17 are defined by a single sheet of the lateral wall 4 made of a paper material intercalated by a plurality of second sectors 18 defined by a superposing of several layers of the sheet of the lateral wall 4. The second sectors 18 comprise at least a first portion 19 defined by the layer coming from a first sector 17, at least a second portion 20 defined by the layer coming from the first sector 17 adjacent to the preceding sector and by at least a connecting portion 21 which uninterruptedly connects the other two portions 19, 20: in this way the portions of the first sector 17 and the connecting portions 20 define a superposing of at least three layers of the lateral wall 4 made of a paper material. In other terms, the pleats 16 comprise a folding zone 22 which comprises a first and a second superposing zone 23, 24: the first superposing zone 23 comprises at least a first and a second portion 25, 26 substantially facing one another, in particular in contact with one another, defined by the second surface 4b of the lateral wall and in particular comprising the second layer 9 (figure 12). The second superposing zone (24) comprises at least a first and a second portion (27, 28) substantially facing one another, defined by the first surface 4a of the lateral wall 4 and in particular in contact with the first layer 8 (figure 12). As previously mentioned, the pleats 16 are configured for enabling deformation of the lateral wall 4, in particular enabling the arrangement thereof in a three-dimensional configuration: structurally the pleats 16 enable compensating the quantities of additional material which would be created during the passage of the lateral wall 4 from the flat configuration to the three-dimensional configuration.

As can be imagined, the greater the development in height of the mould 1, the greater the quantity of material to be compensated for. In fact, at least one of the portions of the first and/or second superposing zone 23, 24 exhibits an area having an increasing progression in a distancing direction from the base 3: this progression depends on the structure of the mould 1 (of the lateral wall 4) following the deformation step. As can be noted from the figures, the pleats 16 exhibit, according to the transversal section, a substantially Z-shaped profile (figure 11): this profile, as previously mentioned, exhibits a development having an increasing progression in a distancing direction from the base 3. In a case where the lateral wall 4 exhibits a parallelepiped shape, the pleats created on the lateral wall 4 will at least in part be different to one another. However, in a case where the lateral wall exhibits a truncoconical shape, the pleats 16 will be substantially identical to one another. Obviously this configuration further depends on the shape, prior to the deforming step, of the lateral wall 4, which must be discoid. In still greater detail, it can be observed from the accompanying figures that the pleats 16 are arranged in a uniform progression along the lateral wall 4. In particular, the pleats 16 are substantially equally spaced from one another. In a case where the mould is made of a single sheet of paper material, for example by deep-drawing, at least the first prevalent development surface of the lateral wall 4 is covered with a sliding material able to facilitate arrangement of the lateral wall 4 from the flat configuration to the three-dimensional configuration; in particular, the sliding material guarantees resistance to deformation of the lateral wall, thus preventing breakage or tears of the sheet material. In order to better understand the functionality of the sliding material, it can be stated that the lateral wall 4, during the deforming step, is subjected to a high degree of stress due to the significant deforming thereof in a vertical direction of the paper and to the consequent necessary folding thereof. The sliding material thus enables reducing the stresses on the lateral wall 4 during the deforming step thereof and therefore enables preventing any tears or breakage which might compromise the structural integrity of the mould 1. In detail, the sliding material is arranged on at least a portion of the sheet of paper material of the lateral wall; however, in general, the whole internal surface of the mould (first surfaces 3a, 4a of the base 3 and the lateral wall 4) exhibits the sliding material. The sliding material comprises, for example, at least a layer of silicone material.

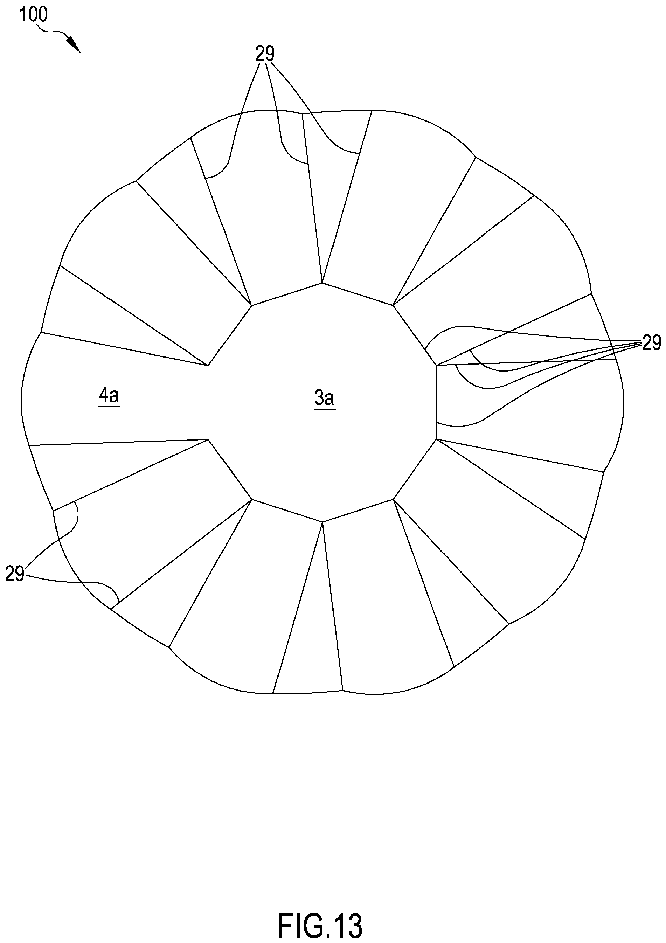

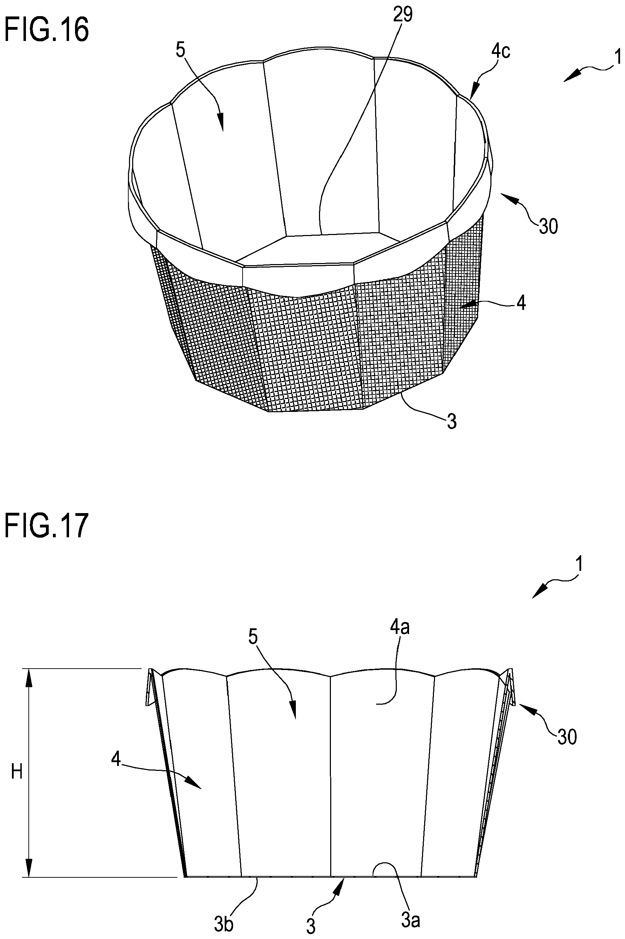

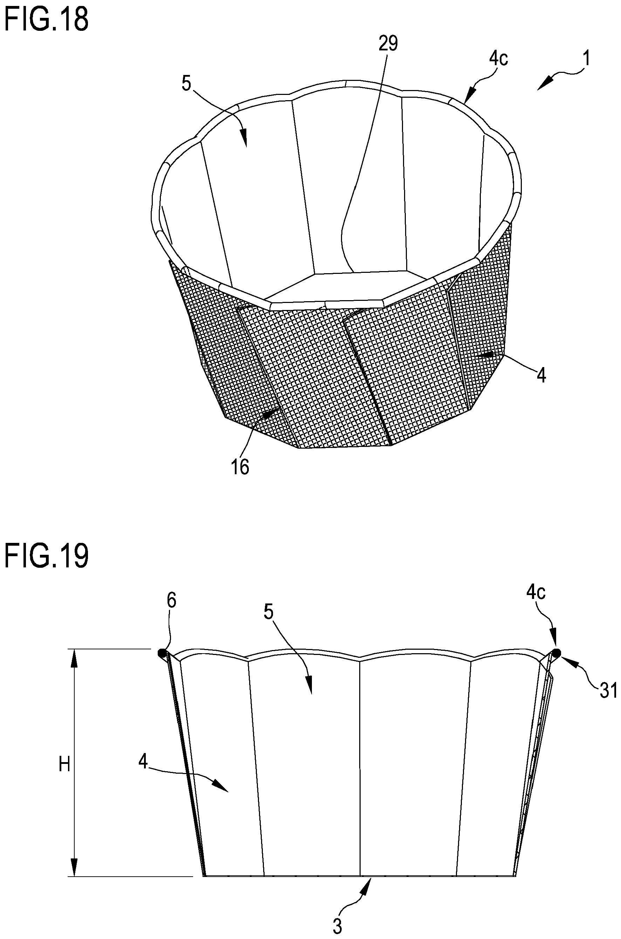

Further, in a case where the mould 1 is obtained by deformation of a single sheet made of paper material, the base and the lateral wall 3, 4 can be provided with fold lines 29 (figure 13) developing starting from the external perimeter of the base 3 up to the free edge 6 of the lateral wall 4: the fold lines 29, as will be more fully described in the following, are crushed parts defined on the thickness of the paper sheet configured so as to facilitate the folding of the sheet i.e. fold-lines of the lateral wall 4. Independently of the embodiment of the mould 1, i.e. independently of the fact that the mould 1 is obtained from a single sheet or by gluing of two bodies (base and lateral wall), the lateral wall 4 can, in a non-limiting way, exhibit an end portion 4c, opposite the base 3, folded in a use condition of the mould 1, externally of the housing compartment 5. In fact, the folded end portion 4c is able to at least partly define the free edge 6 of the mould 1 (see for example figures 16-19). In an embodiment illustrated in figures 16 and 17, the end portion 4c comprises at least an external fold 30, the fold 30 is folded towards the base 3 so as to form, with the lateral wall 4of the mould 1, an acute angle. The fold 30 can simply be folded towards the outside without being engaged to the external lateral wall 4, or can be glued and/or heat-welded to the surface 4b of the lateral wall 4. The curl 30 advantageously develops about the free edge 6 of the housing compartment 5 to form a closed profile about the compartment 5. In terms of geometry, the fold 30 and the lateral wall 4 define an acute angle, external of the housing compartment 5, which is less than 25°, in particular comprised between 1° and 15°. As regards the dimensional aspect, the fold 30 can exhibit a maximum extension, defined by the distance between the free edge 6 of the lateral wall 4 and an end edge of the fold 30, comprised between 5 and 50 mm, in particular comprised between 10 and 25 mm. In a further embodiment illustrated in figures 18 and 19, the end portion 4c comprises at least an external curl 31, the curl 31 is folded towards the base 3 so as to form, one or more envelopments external of the housing compartment 5. The curl 31 can comprise a number of full envelopments identical to or greater than 1, in particular comprised between 1 and 5. In the same way as for the fold 30, the curl 31 can simply be folded towards the outside without being engaged to the external lateral wall 4, or can be glued and/or heat-welded to the surface 4b of the lateral wall 4. The curl 31 advantageously develops about the free edge 6 of the housing compartment 5 to form a closed profile about the compartment 5.

### Manufacturing Process

A further object of the present invention relates to a process for realising a cooking mould 1 for food product as described above, in particular panettone cake and/or tarts.

A first embodiment of the procedure includes predisposing a reel 150 of a first sheet 200 made of a paper material which is unreeled along a predetermined advancement direction MD. Thereafter the first sheet 200 is deformed by crushing so as to define the undulated second layer 9. Purely by way of example, the deformation is carried out by means of a sort of cogwheel 170 which crushes the first sheet on a belt and/or a roller 180. To guarantee correct crushing of the first sheet, the process includes predisposing a counter-pressure element 185 able to operate the cogwheel 170 in counter-position to the belt and/or roller 180: the counter-pressure element is configured so as to maintain the first sheet in contact with the cogwheel with the aim of guaranteeing crushing thereof and subsequent deformation thereof. The second layer 9 is subsequently advanced along the advancement direction MD on the belt and/or the roller. The step of crushing defines the plurality of undulations 10 of the layer 9 which extend along the respective transversal trajectories T1, in particular perpendicular, to the advancement direction MD of the first sheet.

In a parallel way to the forming of the second layer 9, the process includes predisposing a second reel 160 of a second sheet 210 made of paper material which is unreeled along the advancement direction MD to form the first layer 8. Following this, the second sheet is flanked to the second layer 9 and engaged thereto. In particular, the second sheet (first layer 8) is arranged on top of the second layer 9 so that the bottom portions 11 of at least part of the undulations 10 contact the first layer 8. With the aim of guaranteeing the coupling between the first and the second layer 8, 9 the process includes predisposing, on at least one of the layers, a predetermined quantity of glue able to engage the sheet following the contact. Alternatively the two layers 8, 9 can be coupled to any other adhesive material or by heat-welding the layers.

The process further comprises a step of pressing the two layers 8, 9 following contact between the sheets of paper: the step of pressing prevents the layers of paper from disengaging during the gluing step. The first and the second layer 8, 9 coupled in a single sheet made of a paper material are subsequently advanced along the advancement direction MD on the belt and/or the roller.

The above-described process includes predisposing two sheets of paper to define the first and the second layers 8, 9. Obviously the process can alternatively include predisposing one or more intermediate layers 32 between the first and the second paper sheet; in this condition the first and the second layer 8, 9 will be indirectly engaged to one another by means of one or more intermediate layers 32. The steps of predisposing the first and the second layer 8, 9 can further include at least a step of application of a coating layer 15 of plastic material at least on the second sheet 210 able to define the layer 8. The coating layer 15 is arranged on the opposite side to the second layer 9 and will define at least a part of the internal surface of the mould 1: at least a part of the first surface 3a of the base 3 and/or at least a part of the first surface 4a of the lateral wall 4. The layers joined in this way are continuously advanced along the advancement direction MD of the belt and/or roller or can be wound on a further reel 300 so as to be processed separately from the predisposing step of the layers. The paper material predisposed in this way defines a layer of undulated paper having an unfaced undulation. In particular realising and using the cooking moulds previously described with undulated paper having undulations E or F (unfaced undulation) according to what is defined in the standards at present in law for undulated cartons.

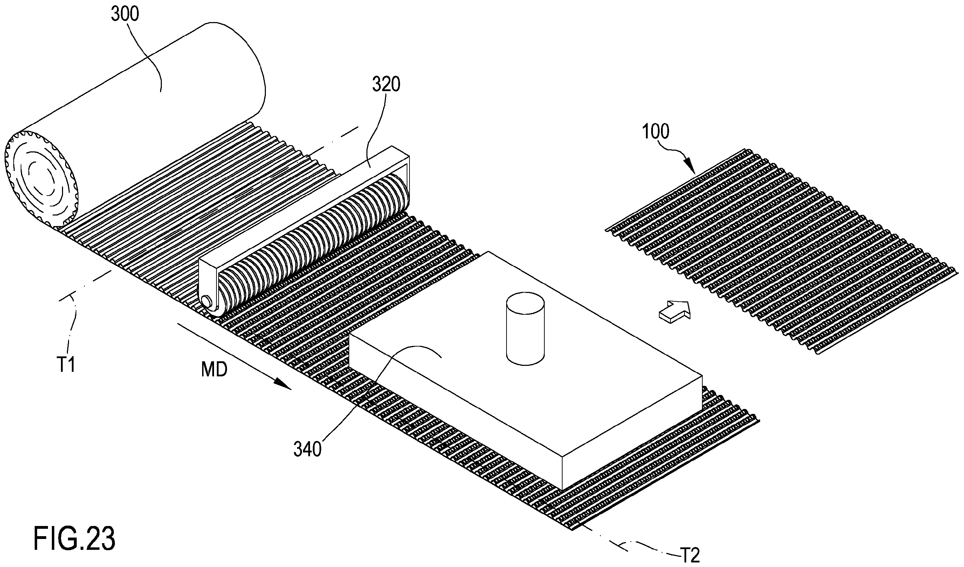

Figure 23 schematically and non-limitingly illustrates the winding of a third reel 300 of the undulated paper previously-realised; the process steps described in the following can also be carried out continuously during the step of predisposing the first and second layer 8, 9.

Following the above-described steps, the sheet made of paper material, constituted at least by the first and the second layer 8, 9, is advanced along an advancement direction MD; the process includes at least a formation step on the prevalent development surface of the second layer 9 of a plurality of troughs 13 aligned along the first prevalent development trajectory T1 of the undulations 10 so as to define thereon a reduction in terms of height. In fact, the forming of the troughs 13 includes at least partially crushing the crests 12; the step of crushing is non-limitingly carried out using a roller 320 configured such as to carry out crushing of the undulations 10 arranged perpendicularly with respect to the first trajectories T1 of the undulations 10, and therefore parallel to the advancement direction MD of the joined sheets 8, 9. The roller 320 contacts the advancing undulations 10 so as to define a series of troughs 13 on successive undulations, aligned along the second trajectory T2 parallel to the advancement direction MD of the layers 8, 9 (perpendicular to the trajectories T1 of the undulations 10). The completion of the second layer 9 is carried out only following the formation step of the troughs 13.

Following the formation of the undulations 10 and the troughs 13, the process includes at least a step of cutting the sheet constituted by at least the first and the second layer 8, 9: the sheet is cut using a knife or cutter 340 (figure 23) so as to define a blank 100. The process can include various steps of cutting the sheet to define at least two different and distinct blanks which will respectively define the base 3 and the lateral wall 4; in this configuration, following the formation of the distinct blanks the process exclusively includes a step of joining the blanks to define the mould 1. In a preferred embodiment of the invention, the process includes a single step of cutting the sheet of paper material to define a single blank 100. The blank 100 in a single sheet is then advanced along the advancement direction MD of the process and deformed, for example by means of a single deep-drawing step, so as to define the mould 1 in a single piece. By operating the process it is therefore possible to realise moulds 1 for cooking and containing food products in a single sheet (in a single piece). The step of deforming the single sheet (blank 100) to define the mould 1 can cause, on the paper sheet, stresses which might also lead to breakage of the mould 1. Therefore, the process can, non-limitingly, include at least a sub-step of predisposing at least a sliding material on the blank 100, in particular at least on a portion (in general on all) of the blank which will then define the lateral wall of the mould. The sliding material is advantageously applied on all the surface of the blank, i.e. on the smooth surface which will define at least the first surfaces 3a, 4a of the mould 1: the sliding material is configured so as to facilitate the deformation of the single sheet from the flat configuration to the three-dimensional configuration. In particular, the application step of the sliding material guarantees the deformation of the blank 100, preventing (or very much limiting) any breakage of the sheet material. In fact, this facilitates generation of a lateral wall 4 and of the base 3 without the zones most stressed the paper is subjected to reaching the breakage limit (in particular the perimeter edge which connects the base 3 to the lateral wall 4). The sliding material is for example constituted by a silicone material. Note further that the presence of the sliding material helps the mould 1 to maintain the three-dimensional shape thereof as the heat applied during the step of deformation is such that the silicone material or in any case the sliding material tends to maintain the geometry reached, improving the maintaining of the shape of the paper material, i.e. reducing the release thereof and the tendency to return into the non-deformed situation.

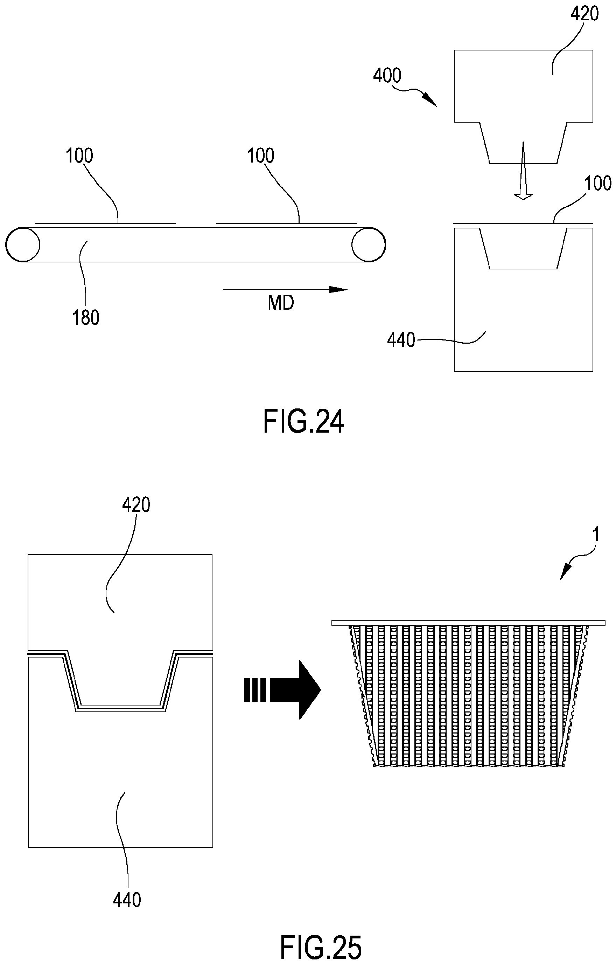

In the following the process for defining the mould 1 in a single piece will be described. Figures 24 and 25 schematically illustrate a mould 400 for taking the blank 100 from a flat shape (the condition of figure 23) to the conditions of figure 23 in a single production step. In particular, the blank 100 is positioned internally of a female mould 440 which supports the blank 100 at least at an external perimeter of the blank 100. In greater detail, at least an abutment is present (for example circular), which supports a part of the blank 100. A male forming mould 420, at least in part complementarily shaped to the female mould 440, descends towards the female mould 440, folding the blank 100 so as to bring it into the configuration of figure 25: the pressure of the moulds 420, 440 enables folding the excess material generated during the deformation of the blank so as to define the pleats 16. During the deforming of the blank 100 it is further possible to define, at the free edge 6, the fold 30 or the curl 31 of the lateral wall 4.

It is useful to note that in a case where the mould 1 is made by deformation of a single sheet, the process can include a step of crushing the blank 100, which has the aim of creating thereon a series of fold lines 29 (figure 13) configured such as to score the paper material of the mould with the aim of facilitating deformation and folding thereof. Note that the crushing operation for defining the fold lines 29 can be realised simultaneously with the cutting step of the paper in order to define the blank 100 using appropriate blanking machines: in this condition the cutting and folding steps are carried out at the same time. The folding of the blank 100, in particular at the lateral wall 4 thereof, is usually realised at the fold lines 29. The fold lines 29 can be realised on the mould 1 so as to define the polygonal perimeter of the base 3, as illustrated for example in figure 13.

### ADVANTAGES OF THE INVENTION

The present invention enables obtaining one or more of the following advantages and resolving one or more of the problems encountered in the prior art. Primarily, the cooking mould 1, thanks to the presence of the troughs 13, is certainly more flexible and manipulable than the cooking moulds of the prior art, which exclusively exhibit a monodirectional undulated surface. The greater flexibility of the paper sheet material, and in particular the second layer 9, enables the paper sheet to fold more easily without generating stress on the material itself, which might determine the breakage of the mould 1. In fact, the second layer 9 as defined above enables facilitating the deformation step of the sheet material for the definition of the pleats 16, the fold 30 or the curl 31.

The mould 1 of the present invention, as well as being flexible, guarantees in any case an adequate support for the food products while at the same time enabling a homogeneous cooking of the foods both at the base 3 and at the lateral wall 4. A cooking mould 1 of the present invention can be open, in a successive step to the cooking of the food product contained internally thereof, so as to assume a condition of complete or partial opening with the aim of facilitating the cutting operations of the food product contained therein and can further be reused in successive consumption operations of the product itself. In the case of a product in a single sheet, the opening of the mould does not cause any laceration of the paper material which returns into the flat configuration thereof as a sheet of paper material below the product. In this way not only does the mould remain more easily closed, but also collects any crumbs of product, in any case enabling an easy cutting of the food product. The invention is further easy to use, easy to actuate and simple and economical to realise.

## Claims

1. A cooking mould (1) made of a paper material for food products, in particular for sweet foods such as panettone cake and/or tarts, comprising:
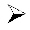 a base (3) made of a paper sheet material having a first and a second prevalent development surface (3a, 3b) opposite one another,
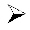 at least a lateral wall (4) made of a paper sheet material having a first and a second prevalent development surface (4a, 4b) opposite one another, the lateral wall (4) emerging transversally from the base (3);
the base (3) and the lateral wall (4) defining a housing compartment (5) configured so as to contain one or more food products, the lateral wall (4), on the opposite side with respect to the base (3), defining a free edge (6) delimiting the housing compartment (5) and defining an opening (7) located, in a use condition of the mould (1), in an upper part thereof;
wherein at least the lateral wall (4) comprises:
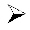 a first layer (8) made of a substantially smooth paper material defining one from between the first and second prevalent development surface (4a, 4b),
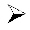 a second layer (9) made of paper material, opposite the first layer (8), defining another from between the first and second prevalent development surface (4a, 4b);
and wherein the second layer (9) is an undulated layer exhibiting a plurality of undulations (10), each of which extends along a first trajectory (T1) of prevalent development, each undulation (10) exhibiting a predetermined height (h) defined by a maximum distance between a base portion (11) and a crest (12) of each undulation (10),
**characterised in that** the second undulated layer (9) further comprises a plurality of troughs (13) defined along the first trajectory (T1) of the undulations (10) so as to define on the undulations (10) a plurality of successive height reductions of the undulation (10), the troughs (13) being formed by at least partially crushing at least a part of the undulations (10) at the crest (12).

2. The mould of claim 1, wherein the plurality of troughs (13) comprises a predetermined number of series of troughs (13), each series of troughs (13) being aligned along a second development trajectory (T2) that is transversal, in particular perpendicular, to the first prevalent development trajectory (T1) of the undulations (10).

3. The mould of any one of the preceding claims, wherein the first prevalent development trajectory (T1) of each undulation (10) is straight, and wherein the second trajectory (T2) of prevalent development of each trough (13) is straight,
the series of troughs (13) crossing the undulations (10) so as to define a series of projections (14) each of which exhibits, in a view from above perpendicular to the projections (14), a profile having a substantially rectangular extension.

4. The mould of any one of the preceding claims, wherein a density of undulations (10) per linear metre is greater than 250, in particular an undulation density per linear metre is 295 +/- 13 or 420 +/- 13, wherein the height (h) of each undulation is comprised between 0.3 and 2.5 mm, in particular comprised between 0.5 and 2 mm, and wherein each of the troughs (13) exhibits a predetermined depth (p) defined by a maximum distance between the crest (12) of an undulation (10) and a bottom portion (13a) of a trough (13) crossing the undulation (10), the depth (p) of the trough (13) being comprised between 0.3 and 2 mm, in particular between 0.3 and 1.6 mm.

5. The mould of any one of the preceding claims, wherein the base (3) and the lateral wall (4) are made in a single piece to form a single solid body, the mould being realised by deformation, for example by deep-drawing, of a single flat sheet of paper material, the sheet, previously to a deformation step, lying in a prevalent development plane and comprising the first and second layer (8, 9),
and wherein the mould (1), following the deformation step, is in an operating condition in which it defines the housing compartment (5), an internal surface of the housing compartment (5) being defined by the first prevalent development surfaces (3a, 4a) respectively of the base (3) and the lateral wall (4).

6. The mould of any one of the preceding claims, wherein the paper material of the base (3) comprises:
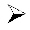 at least the substantially smooth first paper layer (8) defining one from between the first and second prevalent development surface (3a, 3b),
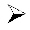 at least the second paper layer (9) opposite the first layer (8) and defining the other from between the first and second prevalent development surface (3a, 3b).

7. The mould of the preceding claim, wherein the first layer (8) of the base (3) and the lateral wall (4) defines the entirety of the internal surface of the housing compartment (5), and wherein the second layer (9) of the base (3) and the lateral wall (4) define the entirety of the external surface of the mould (1).

8. A process for realising a cooking mould (1) for food products according to any one of the preceding claims, in particular panettone cake and/or tarts, comprising following steps:
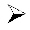 predisposing at least a base (3) made of a paper sheet material having a first and a second prevalent development surface (3a, 3b) opposite one another,
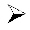 predisposing at least a lateral wall (4) made of a paper sheet material having a first and a second prevalent development surface (4a, 4b) opposite one another, at least the paper material of the lateral wall (4) exhibiting:
• at least a first layer (8) made of a substantially smooth paper material defining one from between the first and second prevalent development surface (4a, 4b),
• at least a second layer (9) made of a paper material, opposite the first layer (8), defining another from between the first and second prevalent development surface (4a, 4b),
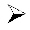 forming with the base (3) and the lateral wall (4) a convex housing compartment (5) configured so as to contain one or more food products, the lateral wall (4), on the opposite side with respect to the base, defining a free edge (6) delimiting the housing compartment (5) and defining an opening (7) located in an upper part of the mould (1),
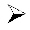 forming, on the prevalent development surface of the second layer (9), an undulated surface exhibiting a plurality of undulations (10) each of which develops along a first prevalent development trajectory (T1), each undulation (10) exhibiting a predetermined height defined by a maximum distance between a base portion (11) and a crest (12) of each undulation (10),
**characterised in that** the process further comprises the step of:
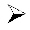 following the formation of the undulations (10), forming on the prevalent development surface of the second layer (9) a plurality of troughs (13) aligned along the first prevalent development trajectory (T1) of the undulations (10) so as to define thereon a corresponding plurality of reductions in terms of height, wherein the step of forming the troughs (13) includes at least partially crushing at least a part of the undulations (10) at the crest (12).

9. The process of the preceding claim, wherein the step of forming the undulations (10) includes following sub-steps:
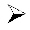 moving a first sheet (200) made of a paper material along a predetermined advancement direction (MD),
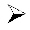 deforming by crushing the first sheet (200) so as to define the second layer (9) in which each undulation (10) extends transversally to the advancement direction (MD) of the first sheet (200),
and wherein the step of predisposing the paper material defining at least the lateral wall (4) further comprises following sub-steps:
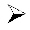 moving at least a second smooth sheet (210) made of a paper material along the predetermined advancement direction (MD),
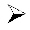 subsequently to the formation of the undulations (10), superposing the second sheet (210) on the first sheet (200),
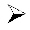 joining the first and the second sheet (200, 210) in such a way that at least a part of the base portions (11) of the undulations (10) is in contact with and constrained to the first sheet (200).

10. The process of any one of the preceding process claims, wherein the step of deforming by crushing the first sheet for forming the undulations (10) is carried out using a roller configured such as to define first prevalent development trajectories (T1) of the transversal undulations (10), in particular perpendicular to the advancement direction (MD) of the first sheet (200).

11. The process of any one of the preceding process claims, wherein the step of forming the troughs (13) includes at least partially crushing at least a part of the undulations (10) at the crest (12), and wherein the step of crushing the undulations (10) includes following steps:
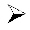 moving at least the first sheet (200) along an advancement direction (MD),
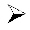 crushing, using a roller, for example grooved, the undulations (10) in advancement such as to define a series of troughs (13) on successive undulations, the troughs (13) of successive undulations being aligned along the advancement direction (MD) of the first sheet (200).

12. The process of any one of the preceding process claims, wherein the base (3) and the lateral wall (4) are realised in a single piece of paper sheet material;
the predisposing of the base (3) and the lateral wall (4) comprising following steps:
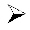 predisposing a single sheet made of paper sheet material comprising at least the first and second layer (8, 9);
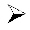 cutting the single sheet so as to define a blank (100) extending along a prevalent development plane;
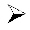 deforming the blank (100) so as to define the housing compartment (5).

## Patentansprüche

1. Kochform (1), welche aus einem Papiermaterial hergestellt ist, für Lebensmittel-Produkte, insbesondere für süße Lebensmittel, wie beispielsweise Panettone-Kuchen und/oder Torten, umfassend:
- eine Basis (3), welche aus einem Papierbahn-Material mit einer ersten und einer zweiten vorherrschenden Entwicklungsfläche (3a, 3b) hergestellt ist, welche einander gegenüberliegen,
- wenigstens eine laterale Wand (4), welche aus einem Papierbahn-Material mit einer ersten und einer zweiten vorherrschenden Entwicklungsfläche (4a, 4b) hergestellt ist, welche einander gegenüberliegen, wobei die laterale Wand (4) transversal aus der Basis (3) hervorgeht;
wobei die Basis (3) und die laterale Wand (4) ein Aufnahmefach (5) definieren, welches derart eingerichtet ist, dass es ein oder mehrere Lebensmittel-Produkte enthält, wobei die laterale Wand (4) an der gegenüberliegenden Seite hinsichtlich der Basis (3) einen freien Rand (6) definiert, welcher das Aufnahmefach (5) begrenzt und eine Öffnung (7) definiert, welche in einem Verwendungszustand der Form (1) in einem oberen Teil davon angeordnet ist;
wobei wenigstens die laterale Wand (4) umfasst:
- eine erste Schicht (8), welche aus einem im Wesentlichen glatten Papiermaterial hergestellt ist, welches eine aus der ersten und zweiten vorherrschenden Entwicklungsfläche (4a, 4b) definiert,
- eine zweite Schicht (9), welche aus einem Papiermaterial hergestellt ist, gegenüber der ersten Schicht (8), welche eine andere aus der ersten und der zweiten vorherrschenden Entwicklungsfläche (4a, 4b) definiert;
und wobei die zweite Schicht (9) eine gewellte Schicht ist, welche eine Mehrzahl von Wellenformen (10) aufweist, von welchen sich jede entlang einer ersten Bahnkurve (T1) einer vorherrschenden Entwicklung erstreckt, wobei jede Wellenform (10) eine vorbestimmte Höhe (h) aufweist, welche durch eine maximale Distanz zwischen einem Basisabschnitt (11) und einem Scheitel (12) von jeder Wellenform (10) definiert ist,
**dadurch gekennzeichnet, dass** die zweite gewellte Schicht (9) ferner eine Mehrzahl von Senken (13) umfasst, welche entlang der ersten Bahnkurve (T1) der Wellenformen (10) definiert sind, um so an den Wellenformen (10) eine Mehrzahl von aufeinanderfolgenden Höhenreduzierungen der Wellenform (10) zu definieren, wobei die Senken (13) durch wenigstens teilweises Eindrücken wenigstens eines Teils der Wellenformen (10) an dem Scheitel (12) gebildet sind.

2. Form nach Anspruch 1, wobei die Mehrzahl von Senken (13) eine vorbestimmte Anzahl von Reihen von Senken (13) umfassen, wobei jede Reihe von Senken (13) entlang einer zweiten Entwicklungs-Bahnkurve (T2) ausgerichtet ist, welche transversal, insbesondere senkrecht, zu der ersten vorherrschenden Entwicklungs-Bahnkurve (T1) der Wellenformen (10) ist.

3. Form nach einem der vorhergehenden Ansprüche, wobei die erste vorherrschende Entwicklungs-Bahnkurve (T1) von jeder Wellenform (10) gerade ist, und wobei die zweite Bahnkurve (T2) von vorherrschender Entwicklung von jeder Senke (13) gerade ist,
wobei die Reihe von Senken (13) die Wellenformen (10) derart kreuzen, dass eine Reihe von Vorsprüngen (14) definiert wird, von welchen jeder in einer Ansicht von oben senkrecht zu den Vorsprüngen (14) ein Profil mit einer im Wesentlichen rechteckigen Erstreckung aufweist.

4. Form nach einem der vorhergehenden Ansprüche, wobei eine Dichte von Wellenformen (10) pro linearem Meter größer als 250 ist, wobei insbesondere eine Wellenform-Dichte pro linearem Meter 295 +/- 13 oder 420 +/- 13 ist, wobei die Höhe (h) von jeder Wellenform zwischen 0,3 und 2,5 mm beträgt, insbesondere zwischen 0,5 und 2 mm beträgt, und wobei jede der Senken (13) eine vorbestimmte Tiefe (p) aufweist, welche durch eine maximale Distanz zwischen dem Scheitel (12) einer Wellenform (10) und einem Bodenabschnitt (13a) einer Senke (13) definiert ist, welche die Wellenform (10) kreuzt, wobei die Tiefe (p) der Senke (13) zwischen 0,3 und 2 mm beträgt, insbesondere zwischen 0,3 und 1,6 mm.

5. Form nach einem der vorhergehenden Ansprüche, wobei die Basis (3) und die laterale Wand (4) aus einem einzelnen Stück hergestellt sind, um einen einzelnen festen Körper zu bilden, wobei die Form durch Verformung, beispielsweise durch Tiefziehen, einer einzelnen ebenen Bahn aus Papiermaterial hergestellt ist, wobei die Bahn vor einem Verformungsschritt in einer vorherrschenden Entwicklungsebene liegt und die erste und zweite Schicht (8, 9) umfasst,
und wobei die Form (1) dem Verformungsschritt nachfolgend in einem Betriebszustand ist, in welchem sie das Aufnahmefach (5) definiert, wobei eine innere Fläche des Aufnahmefachs (5) durch die ersten vorherrschenden Entwicklungsflächen (3a, 4a) der Basis (3) bzw. der lateralen Wand (4) definiert ist.

6. Form nach einem der vorhergehenden Ansprüche, wobei das Papiermaterial der Basis (3) umfasst:
- wenigstens die im Wesentlichen glatte erste Papierschicht (8), welche eine aus der ersten und zweiten vorherrschenden Entwicklungsfläche (3a, 3b) definiert,
- wenigstens die zweite Papierschicht (9), welche der ersten Schicht (8) gegenüberliegt und die andere aus der ersten und zweiten vorherrschenden Entwicklungsfläche (3a, 3b) definiert.

7. Form nach dem vorhergehenden Anspruch, wobei die erste Schicht (8) der Basis (3) und die laterale Wand (4) die gesamte innere Fläche des Aufnahmefachs (5) definieren,
und wobei die zweite Schicht (9) der Basis (3) und die laterale Wand (4) die gesamte äußere Fläche der Form (1) definieren.

8. Verfahren zum Herstellen einer Kochform (1) für Lebensmittel-Produkte nach einem der vorhergehenden Ansprüche, insbesondere Panettone-Kuchen und/oder Torten, umfassend die folgenden Schritte:
- Voranordnen von wenigstens einer Basis (3), welche aus einem Papierbahn-Material mit einer ersten und einer zweiten vorherrschenden Entwicklungsfläche (3a, 3b) hergestellt ist, welche einander gegenüberliegen,
- Voranordnen von wenigstens einer lateralen Wand (4), welche aus einem Papierbahn-Material mit einer ersten und einer zweiten vorherrschenden Entwicklungsfläche (4a, 4b) hergestellt ist, welche einander gegenüberliegen,
wobei wenigstens das Papiermaterial der lateralen Wand (4) aufweist:
- wenigstens eine erste Schicht (8), welche aus einem im Wesentlichen glatten Papiermaterial hergestellt ist, welches eine aus der ersten und zweiten vorherrschenden Entwicklungsfläche (4a, 4b) definiert,
- wenigstens eine zweite Schicht (9), welche aus einem Papiermaterial hergestellt ist, gegenüber der ersten Schicht (8), welche eine andere aus der ersten und der zweiten vorherrschenden Entwicklungsfläche (4a, 4b) definiert,
- Bilden eines konvexen Aufnahmefachs (5) mit der Basis (3) und der lateralen Wand (4), welches derart eingerichtet ist, dass es ein oder mehrere Lebensmittel-Produkte enthält, wobei die laterale Wand (4) an der gegenüberliegenden Seite bezüglich der Basis einen freien Rand (6) definiert, welcher das Aufnahmefach (5) begrenzt und eine Öffnung (7) definiert, welche in einem oberen Teil der Form (1) angeordnet ist,
- Bilden einer gewellten Fläche an der vorherrschenden Entwicklungsfläche der zweiten Schicht (9), welche eine Mehrzahl von Wellenformen (10) aufweist, von welchen sich jede alle entlang einer ersten vorherrschenden Entwicklungs-Bahnkurve (T1) entwickelt, wobei jede Wellenform (10) eine vorbestimmte Höhe aufweist, welche durch eine maximale Distanz zwischen einem Basisabschnitt (11) und einem Scheitel (12) von jeder Wellenform (10) definiert ist,
**dadurch gekennzeichnet, dass** das Verfahren ferner den Schritt umfasst:
- auf das Bilden der Wellenformen folgend, Bilden einer Mehrzahl von Senken (13) an der vorherrschenden Entwicklungsfläche der zweiten Schicht (9), welche entlang der ersten vorherrschenden Entwicklungs-Bahnkurve (T1) der Wellenformen (10) ausgerichtet sind, um so daran eine entsprechende Mehrzahl von Reduktionen hinsichtlich einer Höhe zu definieren, wobei der Schritt des Bildens der Senken (13) ein wenigstens teilweises Eindrücken von wenigstens einem Teil der Wellenformen (10) an dem Scheitel (12) umfasst.

9. Verfahren nach dem vorhergehenden Anspruch, wobei der Schritt des Bildens der Wellenformen (10) die folgenden Unterschritte umfasst:
- Bewegen einer ersten Bahn (200), welche aus einem Papiermaterial hergestellt ist, entlang einer vorbestimmten Vorschubrichtung (MD),
- Verformen der ersten Bahn (200) durch Eindrücken, um so die zweite Schicht (9) zu definieren, in welcher sich jede Wellenform (10) transversal zu der Vorschubrichtung (MD) der ersten Bahn (200) erstreckt,
und wobei der Schritt des Voranordnens des Papiermaterials, welches wenigstens die laterale Wand (4) definiert, ferner die folgenden Unterschritte umfasst:
- Bewegen wenigstens einer zweiten glatten Bahn (210), welche aus einem Papiermaterial hergestellt ist, entlang der vorbestimmten Vorschubrichtung (MD),
- nachfolgend zu dem Bilden der Wellenformen (10), Überlagern der zweiten Bahn (210) an der ersten Bahn (200),
- Verbinden der ersten und der zweiten Bahn (200, 210) derart, dass wenigstens ein Teil der Basisabschnitte (11) der Wellenformen (10) in Kontakt mit der ersten Bahn (200) und auf diese eingeschränkt ist.

10. Verfahren nach einem der vorhergehenden Verfahrensansprüche, wobei der Schritt des Verformens der ersten Bahn durch Eindrücken zum Bilden der Wellenformen (10) unter Verwendung einer Rolle durchgeführt wird, welche derart eingerichtet ist, dass erste vorherrschende Entwicklungs-Bahnkurven (T1) der transversalen Wellenformen (10) definiert werden, insbesondere senkrecht zu der Vorschubrichtung (MD) der ersten Bahn (200).

11. Verfahren nach einem der vorhergehenden Verfahrensansprüche, wobei der Schritt des Bildens der Senken (13) ein wenigstens teilweises Eindrücken von wenigstens einem Teil der Wellenformen (10) an dem Scheitel (12) umfasst, und wobei der Schritt des Eindrückens der Wellenformen (10) folgende Schritte umfasst:
- Bewegen von wenigstens der ersten Bahn (200) entlang einer Vorschubrichtung (MD),
- Eindrücken der vorgeschobenen Wellenformen (10) unter Verwendung einer Rolle, beispielsweise gerillt, um so eine Reihe von Senken (13) an aufeinander folgenden Wellenformen zu definieren, wobei die Senken (13) von aufeinander folgenden Wellenformen entlang der Vorschubrichtung (MD) der ersten Bahn (200) ausgerichtet sind.

12. Verfahren nach einem der vorhergehenden Verfahrensansprüche, wobei die Basis (3) und die laterale Wand (4) aus einem einzelnen Stück aus Papierbahn-Material hergestellt werden;
wobei das Voranordnen der Basis (3) und der lateralen Wand (4) folgende Schritte umfasst:
- Voranordnen einer einzelnen Bahn, welche aus einem Papierbahn-Material hergestellt ist, welches wenigstens die erste und zweite Schicht (8, 9) umfasst;
- Schneiden der einzelnen Bahn, um einen Rohling (100) zu definieren, welcher sich entlang einer vorherrschenden Entwicklungsebene erstreckt;
- Verformen des Rohlings (100), um so das Aufnahmefach (5) zu definieren.

## Revendications

1. Moule de cuisson (1) constitué d'un matériau de papier pour produits alimentaires, en particulier pour aliments sucrés tels que le panettone et/ou les tartes, comprenant :
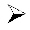 une base (3) constituée d'un matériau feuille de papier ayant une première et une seconde surface de développement prévalent (3a, 3b) opposées l'une à l'autre,
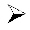 au moins une paroi latérale (4) constituée d'un matériau feuille de papier ayant une première et une seconde surface de développement prévalent (4a, 4b) opposées l'une à l'autre, la paroi latérale (4) émergeant transversalement depuis la base (3) ;
la base (3) et la paroi latérale (4) définissant un compartiment de logement (5) configuré afin de contenir un ou plusieurs produits alimentaires, la paroi latérale (4), sur le côté opposé par rapport à la base (3), définissant un bord libre (6) délimitant le compartiment de logement (5) et définissant une ouverture (7) localisée, dans un état d'utilisation du moule (1), sous une partie supérieure de celui-ci ;
où au moins la paroi latérale (4) comprend :
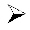 une première couche (8) constituée d'un matériau de papier sensiblement lisse définissant l'une parmi la première et la seconde surface de développement prévalent (4a, 4b),
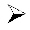 une seconde couche (9) constituée de matériau de papier, opposée à la première couche (8), définissant une autre parmi la première et la seconde surface de développement prévalent (4a, 4b) ;
et la seconde couche (9) étant une couche ondulée faisant preuve d'une pluralité d'ondulations (10), chacune s'étendant le long d'une première trajectoire (T1) de développement prévalent, chaque ondulation (10) faisant preuve d'une hauteur prédéterminée (h) définie par une distance maximale entre une portion de base (11) et une crête (12) de chaque ondulation (10),
**caractérisé en ce que** la seconde couche ondulée (9) comprend en outre une pluralité des creux (13) définis le long de la première trajectoire (T1) des ondulations (10) afin de définir sur les ondulations (10) une pluralité de réductions successives de hauteur de l'ondulation (10), les creux (13) étant formés en écrasant au moins partiellement au moins une partie des ondulations (10) au niveau de la crête (12).

2. Moule selon la revendication 1, la pluralité des creux (13) comprenant un nombre prédéterminé de séries de creux (13), chaque série de creux (13) étant alignée le long d'une seconde trajectoire de développement (T2) qui est transversale, en particulier perpendiculaire, à la première trajectoire de développement prévalent (T1) des ondulations (10).

3. Moule selon l'une quelconque des revendications précédentes, la première trajectoire de développement prévalent (T1) de chaque ondulation (10) étant droite, et la seconde trajectoire (T2) de développement prévalent de chaque creux (13) étant droite,
la série de creux (13) traversant les ondulations (10) afin de définir une série de projections (14) dont chacune fait preuve, dans une vue depuis le dessus perpendiculaire aux projections (14), d'un profil ayant une extension sensiblement rectangulaire.

4. Moule selon l'une quelconque des revendications précédentes, une densité des ondulations (10) par mètre linéaire étant supérieure à 250, en particulier une densité des ondulations par mètre linéaire étant de 295 ± 13 ou 420 ± 13, la hauteur (h) de chaque ondulation étant comprise entre 0,3 et 2,5 mm, en particulier comprise entre 0,5 et 2 mm, et chacun des creux (13) faisant preuve d'une profondeur prédéterminée (p) définie par une distance maximale entre la crête (12) d'une ondulation (10) et une partie de fond (13a) d'un creux (13) traversant l'ondulation (10), la profondeur (p) du creux (13) étant comprise entre 0,3 et 2 mm, en particulier entre 0,3 et 1,6 mm.

5. Moule selon l'une quelconque des revendications précédentes, la base (3) et la paroi latérale (4) étant constituées en une pièce unique pour former un corps solide unique, le moule étant réalisé par déformation, par exemple par étirage profond, d'une feuille plate unique de matériau de papier, la feuille, antérieurement à une étape de déformation, reposant dans un plan de développement prévalent et comprenant la première et la seconde couche (8, 9),
et le moule (1), suite à l'étape de déformation, se trouvant dans un état de fonctionnement dans lequel il définit le compartiment de logement (5), une surface interne du compartiment de logement (5) étant définie par les premières surfaces de développement prévalent (3a, 4a) respectivement de la base (3) et de la paroi latérale (4).

6. Moule selon l'une quelconque des revendications précédentes, le matériau de papier de la base (3) comprenant :
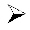 au moins la première couche de papier sensiblement lisse (8) définissant l'une parmi la première et la seconde surface de développement prévalent (3a, 3b),
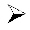 au moins la seconde couche de papier (9) opposée à la première couche (8) et définissant l'autre entre la première et la seconde surface de développement prévalent (3a, 3b).

7. Moule selon la revendication précédente, la première couche (8) de la base (3) et la paroi latérale (4) définissant l'intégralité de la surface interne du compartiment de logement (5),
et la seconde couche (9) de la base (3) et la paroi latérale (4) définissant l'intégralité de la surface externe du moule (1).

8. Procédé de réalisation d'un moule de cuisson (1) pour produits alimentaires selon l'une quelconque des revendications précédentes, en particulier de panettone et/ou de tartes, comprenant les étapes suivantes :
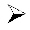 de prédisposition d'au moins une base (3) constituée d'un matériau feuille de papier ayant une première et une seconde surface de développement prévalent (3a, 3b) opposées l'une à l'autre,
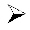 de prédisposition d'au moins une paroi latérale (4) constituée d'un matériau feuille de papier ayant une première et une seconde surface de développement prévalent (4a, 4b) opposées l'une à l'autre, au moins le matériau de papier de la paroi latérale (4) faisant preuve :
• d'au moins une première couche (8) constituée d'un matériau de papier sensiblement lisse définissant l'une parmi la première et la seconde surface de développement prévalent (4a, 4b),
• d'au moins une seconde couche (9) constituée d'un matériau de papier, opposée à la première couche (8), définissant une autre parmi la première et la seconde surface de développement prévalent (4a, 4b),
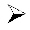 la formation avec la base (3) et la paroi latérale (4) d'un compartiment de logement convexe (5) configuré afin de contenir un ou plusieurs produits alimentaires, la paroi latérale (4), sur le côté opposé par rapport à la base, définissant un bord libre (6) délimitant le compartiment de logement (5) et définissant une ouverture (7) localisée dans une partie supérieure du moule (1),
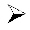 la formation, sur la surface de développement prévalent de la seconde couche (9), d'une surface ondulée faisant preuve d'une pluralité d'ondulations (10) chacune se développant le long d'une première trajectoire de développement prévalent (T1), chaque ondulation (10) faisant preuve d'une hauteur prédéterminée définie par une distance maximale entre une portion de base (11) et une crête (12) de chaque ondulation (10),
**caractérisée en ce que** le procédé comprend en outre l'étape de :
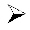 suite à la formation des ondulations (10), se formant sur la surface de développement prévalent de la seconde couche (9) une pluralité de creux (13) alignés le long de la première trajectoire de développement prévalent (T1) des ondulations (10) afin de définir dessus une pluralité correspondante de réductions en termes de hauteur, l'étape de formation des creux (13) comprenant l'écrasement au moins partiellement d'au moins une partie des ondulations (10) au niveau de la crête (12).

9. Procédé selon la revendication précédente, l'étape de formation des ondulations (10) comprenant les sous-étapes suivantes :
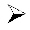 de déplacement d'une première feuille (200) constituée d'un matériau de papier le long d'un sens d'avancement prédéterminé (MD),
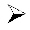 de déformation par écrasement de la première feuille (200) afin de définir la seconde couche (9) dans laquelle chaque ondulation (10) s'étend transversalement au sens d'avancement (MD) de la première feuille (200),
et l'étape de prédisposition du matériau de papier définissant au moins la paroi latérale (4) comprenant en outre les sous-étapes suivantes :
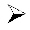 de déplacement d'au moins une seconde feuille lisse (210) constituée d'un matériau de papier le long du sens d'avancement prédéterminé (MD),
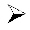 suite à la formation des ondulations (10), de superposition de la seconde feuille (210) sur la première feuille (200),
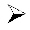 de jonction de la première et de la seconde feuille (200, 210) d'une manière telle qu'au moins une partie des portions de base (11) des ondulations (10) se trouve en contact avec et contrainte à la première feuille (200).

10. Procédé selon l'une quelconque des revendications de procédé précédentes, l'étape de déformation par écrasement de la première feuille pour la formation des ondulations (10) étant effectuée en utilisant un rouleau configuré afin de définir les premières trajectoires de développement prévalent (T1) des ondulations transversales (10), en particulier perpendiculaires au sens d'avancement (MD) de la première feuille (200).

11. Procédé selon l'une quelconque des revendications de procédé précédentes, l'étape de formation des creux (13) comprenant l'écrasement au moins partiellement d'au moins une partie des ondulations (10) au niveau de la crête (12), et l'étape d'écrasement des ondulations (10) comprenant les étapes suivantes :
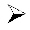 de déplacement d'au moins la première feuille (200) le long d'un sens d'avancement (MD),
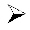 d'écrasement, en utilisant un rouleau, par exemple rainuré, des ondulations (10) dans l'avancement afin de définir une série de creux (13) sur les ondulations successives, les creux (13) des ondulations successives étant alignés le long du sens d'avancement (MD) de la première feuille (200).

12. Procédé selon l'une quelconque des revendications de procédé précédentes, la base (3) et la paroi latérale (4) étant réalisées en une pièce unique de matériau feuille de papier ;
la prédisposition de la base (3) et de la paroi latérale (4) comprenant les étapes suivantes :
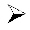 de prédisposition d'une feuille unique constituée de matériau feuille de papier comprenant au moins la première et la seconde couche (8, 9) ;
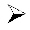 de coupe de la feuille unique afin de définir une découpe (100) s'étendant le long d'un plan de développement prévalent ;
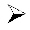 de déformation de la découpe (100) afin de définir le compartiment de logement (5).
